# EUROPEAN PATENT APPLICATION

(11) **EP 1 130 811 A2**
(43) Date of publication of application: **05.09.2001**
(21) Application number: 01101150.9
(22) Date of filing: 22.01.2001
(51) Int. Cl.: H04B 10/105

(54) **A flexible, redundant satellite signal generator system**

(30) Priority: 21.02.2000 US 510980
(71) Applicant: TRW Inc., Redondo Beach, California 90278 (US)
(72) Inventor: Delong, Raymond K., Palos Verdes Estates, CA 90274 (US)
(74) Representative: Schmidt, Steffen J., Dipl.-Ing.

(57) **Abstract**

A flexible, redundant satellite signal generator system and method for generating primary and redundant satellite transmit signals. A primary preamplified signal is generated and divided into first and second divided signals. The first and second divided signals are amplified to generate therefrom primary and redundant transmit signals, respectively.

## Description

### BACKGROUND OF THE INVENTION

### Field of the Invention

The present invention relates generally to laser-based communication systems (hereinafter Lasercom Systems) and, more particularly, to a method and an apparatus for generating primary and redundant generated lasercom transmit signals.

### Description of the Prior Art

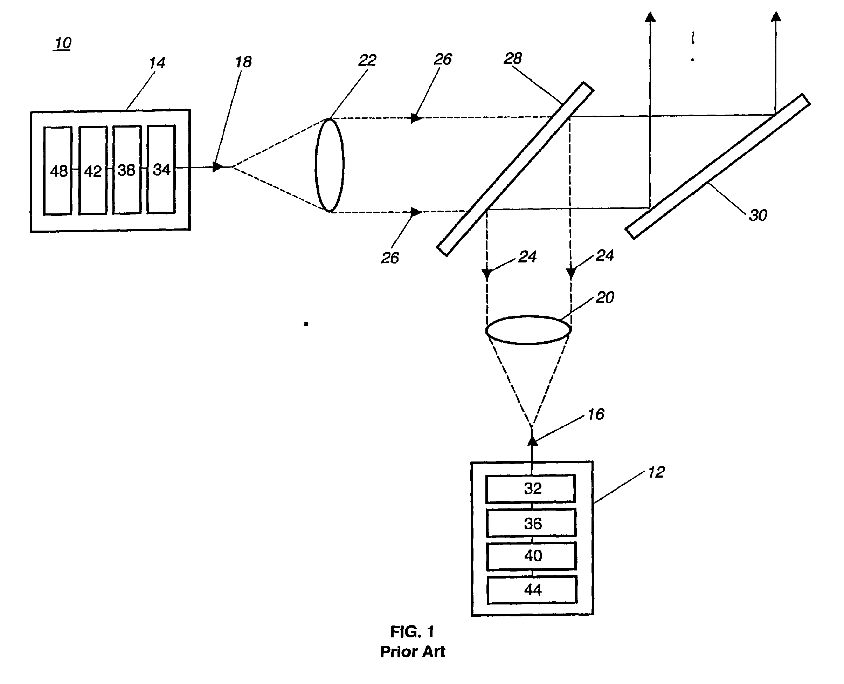

Referring to FIG. 1, lasercom transmit systems 10 are used for satellite communications to pass data from one satellite to another satellite. In a lasercom system, one satellite has the lasercom transmit system 10 and the other satellite has a corresponding lasercom receiver system (not shown). A typical lasercom transmit system 10 includes a primary 12 and a redundant 14 string of electronics and components where a primary transmit signal 16 is generated by the primary string 12 and a redundant transmit signal 18 is generated by the redundant string 14. The primary 16 and redundant 18 signals illuminate primary 20 and redundant 22 optical members, which are typically lens or reflectors. The optical members 20, 22 are configured to collimate the primary 16 and redundant 18 transmit signals respectively. The primary collimated signal is depicted by the lines marked 24; and, the redundant collimated signal is depicted by the lines marked 26. The collimated primary 24 and redundant 26 transmit signals exit the primary 20 and redundant 22 optical members respectively. A folding mirror 28 is used to select either the primary collimated signal 24 or the redundant collimated signal 26, and a point ahead mechanism 30 is used to direct the selected collimated signal 24 or 26 towards the preselected destination location. To select the primary collimated signal 24 requires aligning the primary collimated signal 24 with the folding mirror 28 and point ahead mechanism 30. To select the redundant collimated signal 26 requires removing the folding mirror 28 from the path of the redundant collimated signal 26 so that the redundant collimated signal 26 is incident on the point ahead mechanism 30.

The point ahead mechanism 30 is typically a steerable mirror which is needed by a satellite-based lasercom transmit system 10 to point the selected collimated transmit signal 24 or 26 towards the preselected destination location. For satellite applications, it is typically necessary to point the selected collimated lasercom transmit signal 24 or 26 towards a location in front of the receiving satellite (not shown). This is because the selected collimated lasercom transmit signal 24 or 26 forms a lasercom transmit pattern having a beamwidth which is very narrow, typically on the order of microradians. Because the beamwidth is extremely narrow, the selected collimated transmit signal 24 or 26 cannot be pointed directly at the receiving satellite since, by the time the transmit signal arrives at the receiving satellite, the receiving satellite has moved from its previous location enough to cause the selected collimated transmit signal 24 or 26 to miss the receiving system. To compensate for the narrow beamwidth of the selected collimated lasercom signal 24 or 26, a calculation is made to determine at which destination location ahead of the receiving satellite the selected collimated transmit signal 24 or 26 is to be directed so that it will intercept the receiving satellite. The point ahead mechanism 30 directs the selected collimated transmit signal 24 or 26 towards the calculated location.

One disadvantage of this prior art transmit system 10 is that it requires a folding mirror 28 to switch from directing the primary signal 24 towards the point ahead mechanism 30 to directing the redundant signal 26 towards the point ahead mechanism 30. This requires a moveable mechanism which is expensive, can fail and extracts a weight penalty when the transmit system 10 is disposed on a satellite.

A second disadvantage of the prior art transmit system 10 is that it requires a full primary 12 and redundant 14 string of electronics and components as well as primary 20 and redundant 22 optical members. These fully redundant strings 12, 14 and optical members 20, 22 are costly. In addition, a failure of one component in an electronics package 12 or 14 necessitates switching out of every component in the failed package 12 and switching in the entire redundant electronics package 14. This results in non-failed components being switched out with the failed component. For example, each electronics package 12, 14 typically contains high power amplifiers 32, 34, preamplifiers 36, 38, modulators 40, 42 and oscillators 44, 46. If the primary high power amplifier 32 fails, the primary high power amplifier 32 as well as the associated primary preamplifier 36, modulator 40 and oscillator 44 must be switched out and be replaced by the entire redundant package of electronics 14. The primary preamplifier 36, modulator 40 and oscillator 44 cannot continue to be used since they are coupled to the failed high power amplifier 32. This redundancy scheme, therefore, forgoes the usefulness of some of the non-failed components and is not very robust since a single failed component in an electronics package 12 or 14 causes each component in the package 12 or 14 to be unusable.

What is needed therefore is a transmit system which provides a primary and redundant collimated signal in which a folding mirror is not required to switch between directing the selected primary 24 or redundant 26 signal towards the preselected destination location. What is also needed is an electronics configuration which provides selective coupling of primary and redundant electronics so that a single failed component does not necessitate the switching out of non-failed components.

### SUMMARY OF THE INVENTION

The preceding and other shortcomings of the prior art are addressed and overcome by the present invention which provides a flexible, redundant satellite signal generator system and method for generating primary and redundant satellite transmit signals.

In a first aspect, the present invention provides preamplified signal generating means for generating a preamplified signal. Dividing means are provided which are responsive to the preamplified signal and are operative to divide the preamplified signal into first and second divided signals. Primary and redundant power amplifiers are provided which are responsive to the first and second divided signals, respectively, and are operative to amplify the first and second divided signals and provide therefrom primary and redundant transmit signals.

In a second aspect, the present invention provides a method for generating primary and redundant satellite transmit signals. The method comprises generating a primary preamplified signal and dividing the preamplified signal into first and second divided signals. The first and second divided signals are amplified generating therefrom the primary and redundant transmit signals respectively.

### BRIEF DESCRIPTION OF THE DRAWINGS

Reference is now made to the detailed description of the preferred embodiments illustrated in the accompanying drawings, in which:
FIG. 1 is a schematic drawing of a redundant transmit system in accordance with the prior art;
FIG. 2 is a schematic drawing of a redundant transmit system in accordance with a first embodiment of the present invention;
FIG. 3 is a schematic drawing of an apparatus comprising electronics and components configured to provide a primary and redundant generated lasercom transmit signal in accordance with a second embodiment of the present invention; and,
FIG. 4 is a schematic drawing of a portion of a high reliability transmit system in accordance with a third embodiment of the present invention.

### DETAILED DESCRIPTION OF THE PREFERRED EMBODIMENTS

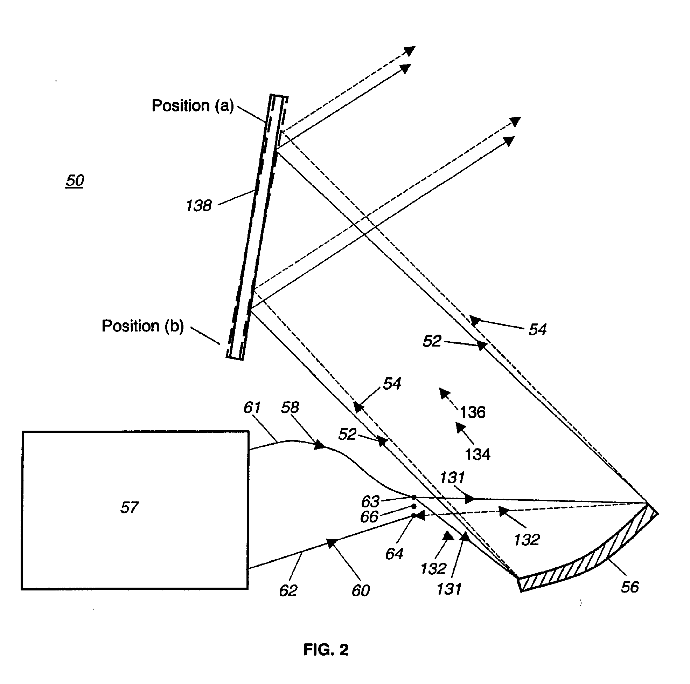

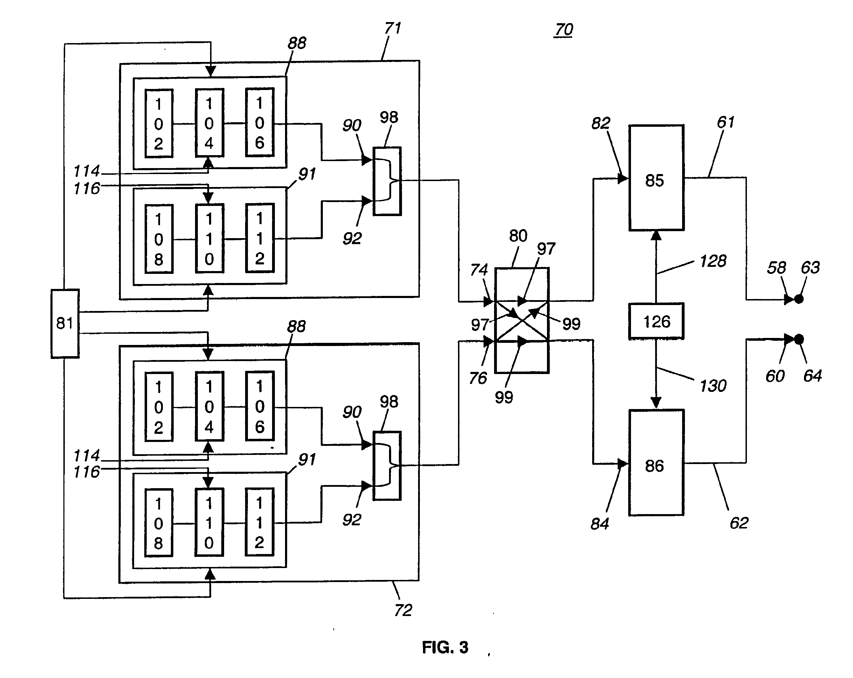

Referring to FIG. 2, a transmit system 50 which provides primary and redundant collimated transmit signals from a common optical member 56 is illustrated. The primary collimated transmit signal is depicted by the solid lines marked 52 and the redundant collimated transmit signal is depicted by the dashed lines marked 54. The system 50 is preferably used in a lasercom transmit system and provides signal generating means 57 for generating primary 58 and redundant 60 transmit signals, and means 61, 62 for providing the primary 58 and redundant 60 transmit signals at first 63 and second 64 preselected locations, respectively, near the focus 66 of the optical member 56. Any means known to one skilled in the art can be used to generate the primary 58 and redundant 60 transmit signals. However, for the preferred embodiment, the robust electronics configuration 70 shown in FIG. 3 is used in a lasercom system to generate the primary 58 and redundant 60 transmit signals.

Referring to FIG. 3, for the preferred embodiment of the invention the robust electronic configuration 70 includes primary 71 and redundant 72 electronics packages which are operative to selectively generate primary 74 and redundant 76 preamplified transmit signals, respectively. For the preferred embodiment of the invention, only one preamplified signal 74 or 76 is generated at a time. To do so, power 81 is provided to the primary 71 electronics to generate the primary preamplified signal d, to the redundant electronics package 72 to generate the redundant preamplified signal 76. As such, switching between the preamplified signals 74, 76 can be accomplished by simply powering the associated electronics 71, 72 respectively. Alternatively, both preamplified signals 74, 76 can be generated simultaneously and a switch (not shown) or any other means known to one skilled in the art can be used to select between the preamplified signals 74, 76.

The selected preamplified signal 74 or 76 is coupled into a divider 80 which is preferably a 3 dB coupler and is operative to divide the selected preamplified signal 74 or 76 into first 82 and second 84 divided signals and provide the divided signals 82, 84 to the amplifying means 85, 86, respectively, which are preferably primary 85 and redundant 86 high power amplifiers. The primary transmit signal 58 is output from the primary amplifier 85 and the redundant transmit signal is output from the redundant amplifier 86. Preferably, only one divided signal 82, 84 is amplified at any one time by providing power to only one high power amplifier 85 or 86 at a time. As such, only one transmit signal 58 or 60 is generated at any one time. This saves satellite power and reduces the heat generated by the electronics which must be dissipated by the satellite.

For most lasercom transmit systems, it is desirable for the electronics 70 to provide a transmit signal 58 or 60 which contains a signal component at both a first wavelength (λ₁) and at a second wavelength (λ₂). To do so, each electronics package 71, 72 preferably contains a first signal generator 88 which generates a first signal 90 at a first wavelength, λ₁, and, a second signal generator 91 which generates a second signal 92 at a second wavelength, λ₂. Herein, the first 88 and second 91 signal generators will be referred to as λ₁ and λ₂ signal generators, respectively, and, the first 90 and second 92 signals will be referred to as λ₁ and λ₂ signals, respectively. Within each electronics package 71, 72, the λ₁ 90 and λ₂ 92 signals are combined together by a combiner 98 forming the preamplified signals 74, 76. As such, each preamplified signal 74, 76 comprises a signal component at λ₁ and λ₂. Each combiner 98 can be any device known to combine two signals 90, 92 at different wavelengths but is preferably a wavelength division multiplexer 98.

The configuration of FIG. 3 provides an additional degree of robustness since the configuration of FIG. 3 additionally provides the capability to mix and match components from the primary 71 and redundant 72 electronics packages without the need to cross-strap the packages 71, 72 together. For example, the λ₁ signal generator 88 located in the primary electronics package 71 can be used with the λ₂ signal generator 91 located in the redundant electronics package 72. To do so, power 81 is provided to the first signal generator 88 in the primary electronics package 71 and also to the second signal generator 91 in the redundant electronics package 72. The second signal generator 91 in the primary electronics package 71 and the first signal generator 88 in the redundant electronics package 72 are left unpowered. In doing so, the primary electronics package 71 generates only a λ₁ signal 90 and the redundant electronics package 72 generates only a λ₂ signal. In the primary electronics package 71, the λ₁ signal 90 will pass through the combiner 98 without being combined with another signal. As such, the primary transmit signal 74 will contain only a λ₁ signal component. Similarly, in the redundant electronics package 72, the λ₂ 92 will pass through the combiner 98 without being combined with another signal.

The primary 74 and redundant 76 transmit signals, containing λ₁ and λ₂ signal component, respectively, are input into the divider 80 which divides each of the primary 74 and redundant 76 signals into a λ₁ 97 and a λ₂ 99 divided signals. The divider 80 adds together one λ₁ and λ₂ forming therefrom the first divided signal 82. The divider also adds together the other λ₁ and λ₂ divided signals forming therefrom the second divided signal 84. In so doing, each divided signal 82, 84 comprises both λ₁ and λ₂ signal components. In this manner, the electronics configuration 70 allows for combining of a signal from one electronics package 71 with a signal from another electronics package 72 without the need to provide separate cross-strap means for the signal generators 88, 91 increasing the robustness of the system 70 without impacting the reliability of the system 70.

The electronics configuration 70 shown in FIG. 3 is a very robust, highly reliable electronics system because it allows selective mixing and matching of not only the primary 71 and redundant 72 electronics packages with the primary 85 and redundant 86 high power amplifiers but additionally allows for selective mixing and matching of λ₁ and λ₂ signal generators with the primary 85 and redundant 86 high power amplifiers. As such, the failure of one component, will not necessitate switching out an entire string of electronics component as is practiced to the prior art electronics configuration of FIG. 1.

The electronics configuration of FIG. 3 is particularly useful for satellite applications requiring extremely high reliability. However, for some satellite applications robustness and complete redundancy is not necessary to a successful mission. If so, the electronics configuration of FIG. 3 can be modified to provide only partially redundancy in which only the components with an increased likelihood of failure are supplied with redundancy. In this case, only one electronics package 71 is provided and is coupled to the divider 80 and high power amplifiers 85, 86. The signal generators 88, 91 typically have a low probability of failure and as such, may not require redundancy whereas the high power amplifier 85, 86 require high amounts of power and thus have a much higher probability of failure. Therefore, providing an electronic configuration without redundant electronics package 71, 72 but having redundant high power amplifiers 85, 86 improves reliability but does not exact the weight penalty associated with a fully robust system.

For the preferred embodiment of the invention, each λ₁ signal generator 88 comprises an electronics box which contains a λ₁ master oscillator 102, a λ₁ modulator 104, and a λ₁ preamplifier 106 coupled together and configured to operate at the first wavelength, λ₁. In addition, each λ₂ signal generator 96 preferably comprises an electronics box which contains a λ₂ master oscillator 108, a λ₂ modulator 110 and a λ₂ preamplifier 112 coupled together and configured to operate at the second wavelength, λ₂. Oscillators, modulators and preamplifiers are typically configured to function at a specific preselected wavelength. Thus, by configuring each λ₁ 88 and λ₂ 91 signal generator as described above, electronic components which are specific to the first wavelength, λ₁, are physically located within a λ₁ signal generator box 88, and, the electronic components which are specific to the second wavelength, λ₂, are physically located within a λ₂ signal generator box 91. Each oscillator 102, 108 preferably comprises a laser diode and each modulator 104, 110 is modulated by an external modulation signal 114, 116 at the proper wavelength λ₁ or λ₂, respectively, and is operative to provide a preselected modulation characteristic.

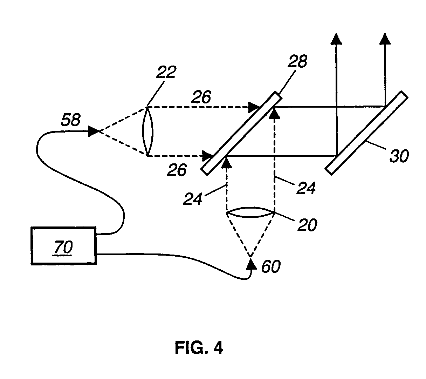

The electronics configuration of FIG. 3 can be coupled with any optical or lasercom system which needs primary 58 and redundant 60 transmit signals. For example, as shown in FIG. 4, the electronics configuration 70 of FIG. 3 can be coupled with the lenses 20, 22, the flip mirror 28 and the point ahead mechanism 30 of the prior art transmit system which was discussed above in connection with FIG. 1. But, preferably, the electronics configuration 70 of FIG. 3 is coupled with the shared optics transmit system shown in FIG. 2 where the electronics configuration 70 of FIG. 3 replaces the signal generator means 57.

Referring back to FIG. 2, the shared optics transmit system 50 includes means for generating primary 58 and redundant 60 transmit signals and means to provide these signals 58, 60 at first 63 and second 64 preselected locations near the focus 66 of the optic 56. Any means known to one skilled in the art can be used to provide the primary 58 and redundant 60 transmit signals at the first 63 and second 64 preselected locations, respectively. For the preferred embodiment of the invention, primary and redundant optical fibers depicted by the lines marked 61 and 62, respectively, are used to provide the primary 58 and redundant 60 generated lasercom transmit signals at the first 63 and second 64 preselected locations, respectively. It is known to one skilled in the art that signals in a lasercom system are transportable by optical fibers and optical fiber components. Thus, to provide the signals 58, 60 at the locations 63, 64, one end of the each optical fiber 61, 62 is coupled to the signal generator means 57 and the opposite ends of each fiber 61, 62 is positioned at one of the preselected locations 63, 64. The optical fibers 61, 62 are adapted to receive the transmit signals 58, 60 from the signal generator means 57 and transport the signals 58, 60 to the first 63 and second 64 preselected locations, respectively.

The first 63 and second 64 preselected locations are selected to be physically close to one another and near the focus 66 of the optical member 56. To do so, the open ends of the optical fibers 61, 62 are positioned to be adjacent one another and touching each other and are affixed to a substrate (not shown) to remain in fixed positions as close as possible to each other.

The primary 58 and redundant 60 transmit signals radiate from the first 63 and second 64 preselected locations, respectively. It is known to one skilled in the art that a signal 58, 60 propagating in an optical fiber 61, 62 will radiate from an open end of the fiber 61, 62. The radiated primary and redundant transmit signals are depicted by the solid lines marked 131 and the dashed lines marked 132, respectively. The optical member 56 is positioned so that the primary 131 and redundant 132 radiated transmit signals illuminate the optical member 56 from the first 63 and second 64 preselected locations, respectively. The optical member 56 can be a lens, a mirror, or any other optical member known to one skilled in the art to collimate a radiated signal 131, 132.

The primary 131 and redundant 132 radiated transmit signals are incident on the optical member 56 which is operative to generate therefrom primary 52 and redundant 54 collimated transmit signals and direct those signals 52, 54 in first 134 and second 136 directions, respectively. As is known to one skilled in the art, signals 131, 132 which originate from different locations 63, 64 near the focus 66 of an optical member 56 will exit the optical member 56 in different directions. The direction at which the collimated signals 52, 54 exit the optical member 56 is determined by the properties of the optical member 56 and the point of origin of the radiated signals 131, 132.

The collimated transmit signals 52, 54 are incident on the point ahead mechanism 138 from different directions 134, 136 respectively. The point ahead mechanism 138 is positioned to either redirect the primary collimated signal 52 towards the preselected destination or redirect the redundant collimated signal 54 towards the preselected destination location. The point ahead mechanism 138 is typically a steerable mirror but can be any device known to one skilled in the art to redirect a signal in a preselected direction.

Referring back to FIG. 1, for the prior art transmit system 10, the primary 24 and redundant 26 collimated signals are incident upon the point ahead mechanism 30 at the same angle. The point ahead mechanism 30 is thus positioned at the same position whether the primary collimated signal 24 is being directed towards the destination location or whether the redundant collimated signal 26 is being directed towards the destination location. In contrast, referring back to FIG. 2, for the present invention, the primary 52 and redundant 54 collimated signals are incident on the point ahead mechanism 138 at different angles. Therefore, to direct the primary collimated signal 52 towards the preselected destination location requires positioning the point ahead mechanism 138 at a first position denoted as position (a) whereas to redirect the redundant collimated signal 54 towards the preselected destination location requires positioning the point ahead mechanism 138 at a second position denoted as position (b). This is typically not a burden on the point ahead mechanism 138 since the point ahead mechanism 138 is typically designed to provide ten or more milliradians of pointing capability and compensating for the different incident directions of the primary 52 and redundant 54 collimated signals only requires a few milliradians of compensation.

The primary 52 and redundant 54 collimated transmit signals can be selectively supplied by the signal generator means 57 as previously described or, alternatively, they can be supplied simultaneously. If they are supplied simultaneously, the primary 52 and redundant 54 collimated transmit signals are both incident on the point ahead mechanism 138 simultaneously, and the point ahead mechanism 138 is used to select between pointing the primary 52 or the redundant 54 collimated signal towards the preselected destination location. To select the primary collimated signal 52, the point ahead mechanism 138 is positioned in position (a) which redirects the primary collimated signal 52 towards the preselected destination location. In doing so, the redundant collimated signal 54 will also be directed by the point ahead mechanism 138 but towards a different location than the primary collimated signal 52. As such, the redundant collimated signal 54 is sent in a direction which will not intercept the receiving satellite. To switch from directing the primary collimated signal 52 towards the preselected location to directing the redundant collimated signal 54 towards the preselected location simply requires repositioning the point ahead mechanism 138 to position (b).

The present invention provides a high reliability transmit system which utilizes a shared optical member to generate primary and redundant collimated transmit signals, and additionally provides a highly robust electronics configuration thereby improving system reliability and lowering the weight of the system. It will be appreciated by persons skilled in the art that the present invention is not limited to what has been shown and described hereinabove. The scope of the invention is limited solely by the claims which follow.

## Claims

1. An apparatus for generating primary and redundant transmit signals comprising:
preamplified signal generating means for generating a preamplified signal;
dividing means responsive to said preamplified signal and operative to divide said preamplified signal into a first and a second divided signal; and
primary and redundant high power amplifier coupled to said dividing means, said primary high power amplifier responsive to said first divided signal and operative to amplify said first divided signal and generate therefrom said primary transmit signal, said redundant high power amplifier responsive to said second divided signal and operative to amplify said second divided signal and generate therefrom said redundant transmit signal.

2. The apparatus of claim 1, further comprises means for selectively activating either of the high power amplifiers to selectively generate either of the transmit signals.

3. The apparatus of claim 2, wherein the primary preamplified signal generating means comprises:
first λ₁ and λ₂ signal generators coupled to combining means, the λ₁ signal generator configured to generate a first signal at a wavelength of λ₁, the λ₂ signal generator configured to generate a second signal at a wavelength of λ₂, the combining means being operative to combine together the λ₁ and λ₂ signals and generate therefrom the primary preamplified signal.

4. The apparatus of claim 3, wherein the λ₁ signal generator comprises:
a λ₁ master oscillator, a λ₁ modulator and a λ₁ preamplifier coupled together, each of which is operative at the λ₁ wavelength, the λ₁ master oscillator, λ₁ modulator and λ₁ preamplifier together being operative to generate the first signal at a λ₁ wavelength;
and wherein the λ₂ signal generator comprises:
a λ₂ master oscillator; a λ₂ modulator and a λ₂ preamplifier coupled together and configured to be operative at the λ₂ wavelength, the λ₂ master oscillator, λ₂ modulator and λ₂ preamplifier together being operative to generate the second signal at the λ₂ wavelength.

5. The apparatus of claim 1, further comprising:
redundant preamplified signal generating means for generating a redundant preamplified signal; and,
selection means for selecting between the primary and redundant preamplified signals.

6. The apparatus of claim 5, wherein each of the preamplified signal generating means comprises:
first λ₁ and λ₂ signal generators coupled to combining means, each λ₁ and λ₂ signal generator configured to generate one first signal at a wavelength of λ₁, and one second signal at a wavelength of λ₂, each combining means being operative to combine together one of the λ₁ and λ₂ signals and generate therefrom one of the preamplified signals.

7. The apparatus of claim 6, wherein each preamplified signal generating means comprises means to selectively generate either a λ₁ or a λ₂ signal, said primary signal generating means generating said λ₁ signal and said redundant signal generating means generating said λ₂ signal, wherein said primary combining means is operative to pass said λ₁ signal to said dividing means and said redundant combining means operative to pass said λ₂ signal to said dividing means, said dividing means operative to divide both said λ₁ and λ₂ signals in first and second divided signals and combine one first divided signal with one second divided signal to provide preamplified signals comprising both λ₁ and λ₂ signals.

8. The apparatus of claim 5, wherein each of the λ₁ signal generators comprises:
a λ₁ master oscillator, a λ₁ modulator and a λ₁ preamplifier coupled together, each of which is operative at the λ₁ wavelength, the λ₁ master oscillator, λ₁ modulator and λ₁ preamplifier together being operative to generate the first signal at a λ₁ wavelength;
and wherein each of the λ₂ signal generators comprises:
a λ₂ master oscillator; a λ₂ modulator and a λ₂ preamplifier coupled together and configured to be operative at the λ₂ wavelength, the λ₂ master oscillator, λ₂ modulator and λ₂ preamplifier together being operative to generate the second signal at the λ₂ wavelength.

9. The apparatus of claim 8, wherein each preamplified signal generating means comprises means to selectively generate either a λ₁ or a λ₂ signal, said primary signal generating means generating said λ₁ signal and said redundant signal generating means generating said λ₂ signal, wherein said primary combining means is operative to pass said λ₁ signal to said dividing means and said redundant combining means operative to pass said λ₂ signal to said dividing means, said dividing means operative to divide both said λ₁ and λ₂ signals in first and second divided signals and combine one first divided signal with one second divided signal to provide preamplified signals comprising both λ₁ and λ₂ signals.

10. A method for generating primary and redundant satellite transmit signals comprising:
generating a primary preamplified signal;
dividing the primary preamplified signal into first and second divided signals;
amplifying the first divided signal to generate therefrom the primary transmit signal; and,
amplifying the second divided signal to generate therefrom the redundant transmit signal.

11. The method of claim 10, further comprises:
selecting between the primary and redundant transmit signals by amplifying only the first divided signal when the primary transmit signal is selected; and, switching to amplifying the second divided signal when the redundant transmit signal is selected.

12. The method of claim 11, wherein generating a primary preamplified signal comprises:
generating a primary signal at a first wavelength, λ₁, and a primary signal at a second wavelength, λ₂, and,
combining together the primary signals to generate therefrom the primary preamplified signal.

13. The method of claim 11, further comprising:
generating a redundant preamplified signal; and,
selecting between the primary and redundant preamplified signals; wherein
dividing the primary preamplified signal comprises:
dividing the selected preamplified signal into first and second divided signals.

14. The method of claim 13, wherein generating a primary preamplified signal comprises:
generating a primary signal at a first wavelength, λ₁, and a primary signal at a second wavelength, λ₂, and,
combining together the primary signals to generate therefrom the primary preamplified signal,
wherein generating a redundant preamplified signal comprises:
generating first and second redundant signals at λ₁ and λ₂ wavelengths, respectively, and,
combining together the first and second redundant signals providing therefrom the redundant preamplified signal.

15. The method of claim 13, wherein selecting between the primary preamplified signal and the redundant preamplified signal comprises selecting between the primary and redundant preamplified signals by generating only the primary preamplified signal to select the primary preamplified signal; and, generating only the redundant preamplified signal to select the redundant preamplified signal.
